# EUROPÄISCHE PATENTSCHRIFT

(11) **EP 4 015 379 B1**
(45) Veröffentlichungstag und Bekanntmachung des Hinweises auf die Patenterteilung: **18.06.2025**
(21) Anmeldenummer: 21213008.2
(22) Anmeldetag: 08.12.2021
(51) Int. Cl.: B64D 11/00, B64D 47/00, B60Q 3/53, H01R 25/14, B60N 2/02, B64D 11/06, B64D 13/00, H01R 13/24

(54) **POSITIONSDETEKTOR, PASSAGIERVERSORGUNGSKANAL UND FAHRZEUGBEREICH ZUR LAGEBESTIMMUNG EINER PASSAGIERVERSORGUNGSEINHEIT**
POSITION DETECTOR, PASSENGER SUPPLY CHANNEL AND VEHICLE AREA FOR DETERMINING THE POSITION OF A PASSENGER SUPPLY UNIT
DÉTECTEUR DE POSITION, CANAL D'APPROVISIONNEMENT DE PASSAGERS ET ZONE DE VÉHICULE DESTINÉE À LA DÉTERMINATION DE POSITION D'UNE UNITÉ D'APPROVISIONNEMENT DE PASSAGERS

(30) Priorität: 17.12.2020 DE 102020133905
(43) Veröffentlichungstag der Anmeldung: 22.06.2022
(73) Patentinhaber: Airbus Operations GmbH, 21129 Hamburg (DE)
(72) Erfinder: Meinert, Maximilian, 21129 Hamburg (DE); Hentschel, Martin, 21129 Hamburg (DE)
(74) Vertreter: Schornack, Oliver

(56) Entgegenhaltungen:
- DE-A1- 102006 061 455
- DE-A1- 102009 018 111
- US-A1- 2008 078 870
- US-A1- 2011 024 560
- US-A1- 2014 152 088
- US-A1- 2015 122 963

## Beschreibung

Die vorliegende Erfindung betrifft einen Positionsdetektor zur Erkennung einer Lage einer Passagierversorgungseinheit in Längsrichtung eines Passagierversorgungskanals, sowie einen Passagierversorgungskanal und Fahrzeugbereich mit entsprechendem Positionsdetektor bzw. Passagierversorgungskanal. Insbesondere betrifft die vorliegende Erfindung einen Positionsdetektor, Passagierversorgungskanal und Fahrzeugbereich mit einer eine Vielzahl von Sensoren aufweisenden Sensorschiene und einem an einer Passagierversorgungseinheit befestigten Positionsmarker, der von einem der Sensoren erkannt wird.

In Verkehrsmitteln, insbesondere in Flugzeugen, Bussen oder Zügen, werden Sitzreihen mit Passagiersitzen im Wesentlichen senkrecht zu einer Längsrichtung des Verkehrsmittels angeordnet. Je nach angebotenem Komfort, beispielsweise in Form einer oder mehrerer Buchungsklassen, kann der Abstand zwischen zwei Sitzreihen - in Längsrichtung des Verkehrsmittels betrachtet - variieren. Viele Fahrzeugbetreiber wünschen sich eine flexible Gestaltung des Innenraums des Fahrzeugs, insbesondere die Möglichkeit, die Anzahl der Passagiersitze in dem Fahrzeug schnell und flexibel ändern zu können. Hierfür können insbesondere ganze Sitzreihen von einer Befestigung gelöst werden, insbesondere in Längsrichtung des Fahrzeugs verschoben und wieder befestigt werden, um Platz für zusätzliche Sitzreihen bereitzustellen oder umgekehrt, um einen größeren Sitzabstand zu ermöglichen.

Oberhalb von Passagiersitzen sind meist Passagierversorgungseinheiten angeordnet, die zum Beispiel Leselampen und Frischluftdüsen für jeden einzelnen Passagier bereitstellen. Bei jeder Veränderung der Anordnung der Passagiersitze müssen diese Passagierversorgungseinheiten ebenfalls in ihrer Lage und Anzahl verändert werden. Zusätzliche Arbeitsschritte sind notwendig, wenn eine Abstimmung der Passagierversorgungseinheiten mit den zugehörigen Passagiersitzen erfolgen muss.

Ferner betrifft die US 2014/152088 A1 elektrische und elektronische Geräte, die an Überkopfgepäckfächern angeordnet werden, und deren Position innerhalb eines Kabinenlayouts bestimmt werden können. Hierfür sind an einer fest in dem Fahrzeug angeordneten Komponente, wie zum Beispiel einem Überkopfgepäckfach, eine Vielzahl von primären magnetischen Elementen vorgesehen. Ein sekundäres magnetisches Element ist an einer im Fahrzeug variabel anbringbaren Komponente, wie zum Beispiel einer Passagierserviceeinheit (PSU), vorgesehen. Eine Messeinheit kann einen elektrischen Wert, der von einem der primären magnetischen Elemente stammt, erfassen, wobei der elektrische Wert einen Überlappungsstatus des primären magnetischen Elements durch ein sekundäres magnetisches Element angibt. Anhand dieser Informationen kann die absolute Position des sekundären magnetischen Elements und somit der PSU bestimmt werden.

DE 10 2006 061 455 A1 betrifft die Stromversorgung von Passagierserviceeinheiten (PSU). Hierfür wird mindestens ein (elektrischer) Leiter an einer fahrzeugseitigen Schiene angeordnet, während die PSU mindestens einen Stromabnehmer aufweist. Der bzw. die Stromabnehmer kann/können als Schleif- oder Federkontakt ausgebildet sein und formschlüssig in leitenden Kontakt gegen einen Leiter gedrückt werden.

US 2011/024560 A1 betrifft die Befestigung einer Passagierserviceeinheit (PSU) in einem Fahrzeug, wobei die PSU eine Positionserkennungsvorrichtung umfasst. Diese Positionserkennungsvorrichtung kann in Form eines elastischen Elements mit einer Lasche oder Nase implementiert sein, wobei die Lasche oder Nase von der Innenseite einer fahrzeugseitigen Schiene aus in eine Nut oder Kerbe in der Schiene einrasten kann. Die Schiene weist eine Vielzahl von Nuten oder Kerben auf. Die Lasche oder Nase kann somit von einer Innenseite der Schiene aus durch die Nut oder Kerbe die Position der PSU visuell sowie hörbar (Einrastgeräusch) angeben.

Der Erfindung liegt daher die Aufgabe zugrunde, eine Aufteilung eines Fahrzeugs für unterschiedliche Passagierzahlen zu ermöglichen und schnell zu bewerkstelligen.

Diese Aufgabe wird durch einen Positionsdetektor mit den Merkmalen gemäß Anspruch 1, durch einen Passagierversorgungskanal mit den Merkmalen gemäß Anspruch 7 und durch einen Fahrzeugbereich mit den Merkmalen gemäß Anspruch 9 gelöst.

Gemäß einem ersten Aspekt zum besseren Verständnis der vorliegenden Offenbarung umfasst ein Positionsdetektor für eine in einem Passagierversorgungskanal montierbare Passagierversorgungseinheit eine Sensorschiene, die eine Vielzahl von Sensoren aufweist. Die Sensorschiene kann in Längsrichtung des Passagierversorgungskanals angebracht werden. Ferner umfasst der Positionsdetektor einen Positionsmarker, der dazu eingerichtet ist, an der Passagierversorgungseinheit befestigt zu werden und an einem der Vielzahl von Sensoren ein Sensorsignal auszulösen.

Dadurch lässt sich mithilfe der Vielzahl von Sensoren die Position der Passagierversorgungseinheit entlang des Passagierversorgungskanals (in dessen Längsrichtung betrachtet) bestimmen und/oder auslesen. Selbstverständlich kann auch eine Vielzahl von Passagierversorgungseinheiten mit einem jeweiligen Positionsmarker jeweils ein Sensorsignal auslösen und somit in dem Passagierversorgungskanal erkannt und deren jeweilige Position bestimmt und/oder ausgelesen werden.

Zum Beispiel kann die Vielzahl von Sensoren in einer Linie angeordnet sein, vorzugsweise entlang einer Längsrichtung der Sensorschiene. Um die Anzahl von Sensoren zu begrenzen, kann ein vorgegebener Abstand zwischen zwei benachbarten Sensoren vorliegen. Beispielsweise kann der vorgegebene Abstand zwischen zwei benachbarten Sensoren für alle der Vielzahl von Sensoren gleich sein. Dadurch kann anhand einer fortlaufenden Nummerierung der Sensoren eine genaue Position eines Positionsmarkers und somit einer Passagierversorgungseinheit in Längsrichtung der Sensorschiene bestimmt werden. Nur beispielhaft kann der Abstand zwischen zwei benachbarten Sensoren 1 cm, 2 cm, 5 cm oder 10 cm oder 1 Zoll, 2 Zoll oder 5 Zoll betragen.

Alternativ können auch beliebige Abstände zwischen Sensoren vorliegen, wobei es hier zur Lagebestimmung eines Positionsmarkers und somit einer Passagierversorgungseinheit notwendig ist, die Lage jedes einzelnen Sensors in Bezug auf einen Referenzpunkt zu kennen.

Jeder Sensor ist dazu eingerichtet, ein entsprechendes Sensorsignal ausgeben, wenn ein Positionsmarker den Sensor aktiviert, beispielsweise mit dem Sensor interagiert. Damit ist es möglich, sehr schnell zu erfassen, wo entlang des Passagierversorgungskanals eine Passagierversorgungseinheit installiert ist. Insbesondere ist es möglich, sehr schnell zu erfassen, ob zu jeder Sitzreihe (oder zu jedem einzelnen Passagiersitz) eine zugehörige Passagierversorgungseinheit an der richtigen Stelle installiert ist.

Beispielsweise müssen in Flugzeugen zusätzlich zu Leselampen und Frischluftdüsen auch Sauerstoffmasken bereitgestellt werden. Diese werden üblicherweise auch in dem Passagierversorgungskanal installiert. Um gesetzliche und/oder behördliche Bestimmungen einhalten zu können, wurden bisher (Raster-) Pläne für ein Flugzeug erstellt und offiziell zertifiziert, in denen die Lage von Passagiersitzen und die Lage von zugehörigen Sauerstoffmasken im Flugzeug eingezeichnet sind. Dies musste jedes Mal erneut erfolgen, wenn die Anordnung der Passagiersitze im Flugzeug verändert wurde. Mithilfe des hier beschriebenen Positionsdetektors lässt sich die Lage der Sauerstoffmasken in einem Passagierversorgungskanal schnell und einfach bestimmen. Zudem ist es möglich, eine vorgegebene Lage aller Sauerstoffmasken in dem Passagierversorgungskanal auf einmal abzurufen und zu überprüfen.

Zudem ist mindestens einer der Vielzahl von Sensoren ein Drucksensor und der Positionsmarker umfasst ein hervorstehendes Element und ein Federelement, wobei das Federelement dazu eingerichtet ist, das hervorstehende Element in Richtung der Vielzahl von Sensoren zu drücken. Der Drucksensor ist dazu eingerichtet, bei Berührung durch das hervorstehende Element des Positionsmarkers ein elektrisches Sensorsignal auszugeben oder aufgrund einer durch das hervorstehende Element des Positionsmarkers einwirkenden Druckkraft zu verändern.

Bei dem hervorstehenden Element kann es sich um einen Stift, eine Kugel, oder ähnliches handeln, der/die mit dem Federelement in Wirkverbindung steht. Zum Beispiel kann das hervorstehende Element an einer Seite des Federelements befestigt sein oder damit gekoppelt sein, wobei das Federelement eine Kraft auf das hervorstehende Element ausübt, die in Richtung der Sensorschiene wirkt, wenn die Passagierversorgungseinheit mit dem Positionsmarker in dem Passagierversorgungskanal installiert ist.

Wenn die Passagierversorgungseinheit mit dem Positionsmarker in Längsrichtung des Passagierversorgungskanals bewegt wird, kann das hervorstehende Element des Positionsmarkers auf einen der Vielzahl von Sensoren drücken, sobald die Lage des Positionsmarkers (in Längsrichtung des Passagierversorgungskanals betrachtet) mit der des Sensors übereinstimmt. Beispielsweise kann bei der Bewegung der Passagierversorgungseinheit nacheinander immer ein Sensor ein entsprechendes Signal ausgeben, wenn der Positionsmarker auf Höhe des jeweiligen Sensors ist und den Sensor aktiviert. Somit lässt sich während des Installierens der Passagierversorgungseinheit die Lage entlang des Passagierversorgungskanals überprüfen.

Wenn der Positionsmarker einen Stift oder eine Kugel aufweist, kann der Stift oder die Kugel entlang der Sensorschiene gleiten bzw. rollen und nacheinander den jeweiligen Sensor berühren und dabei aktivieren.

In einer weiteren Implementierungsvariante kann die Sensorschiene eine in Längsrichtung der Sensorschiene verlaufende Nut aufweisen. In dieser Nut kann der Positionsmarker gleiten oder rollen, während die Passagierversorgungseinheit in dem Passagierversorgungskanal entlang dessen Längsrichtung bewegt wird. In der Nut kann die Vielzahl von Sensoren angeordnet sein.

Optional kann die in Längsrichtung der Sensorschiene verlaufende Nut ferner eine Vielzahl von Vertiefungen umfassen, wobei jeder der Vielzahl von Sensoren in einer zugehörigen Vertiefung angeordnet ist. Dies ist insbesondere bei einem Positionsmarker mit Federelement vorteilhaft, da der Positionsmarker in die jeweilige Vertiefung zumindest ein wenig einrastet und somit ein haptisches Feedback bietet. Ferner wird eine Aktivierung des in der Vertiefung befindlichen Sensors bei genauer Lageübereinstimmung zwischen Positionsmarker und Sensor ermöglicht.

In einer anderen Implementierungsvariante kann mindestens einer der Vielzahl von Sensoren ein elektrisch leitfähiges Element sein. Dabei kann der Positionsmarker an eine elektrische Spannungsquelle oder eine elektrische Masseleitung (Erdung) angeschlossen sein und dazu eingerichtet sein, einen der Vielzahl von Sensoren zu kontaktieren. Mit anderen Worten kann der Positionsmarker als Berührungselement ausgestaltet sein. Beispielsweise kann der Positionsmarker auch ein hervorstehendes Element und ein Federelement umfassen, wie dies bei der oben beschriebenen Implementierungsvariante der Fall ist. Das Berührungselement kann elektrisch leitfähig ausgestaltet sein und mit dem elektrisch leitfähigen Sensor interagieren. Sobald eine Berührung der beiden Elemente vorliegt, kann elektrischer Strom fließen und somit die Lage des Positionsmarkers bestimmt werden. Dies ermöglicht ein Abfragen der Vielzahl von Sensoren zu einem gewünschten Zeitpunkt, während in der übrigen Zeit der Positionsdetektor (zum Beispiel der Positionsmarker oder der Sensor) stromlos ist.

In einer nicht unter den Schutzbereich der Ansprüche fallenden Variante kann mindesten einer der Vielzahl von Sensoren ein Magnetsensor sein, und der Positionsmarker einen Magneten umfassen. Damit ist auch eine kontaktlose Erkennung der Position des Positionsmarkers entlang der Sensorschiene möglich.

In einer weiteren Implementierungsvariante kann mindestens einer der Vielzahl von Sensoren ein Membranpotentiometer sein. Dabei kann das Membranpotentiometer dazu eingerichtet sein, einen Widerstandswert aufzuweisen, der abhängig von einer Position einer Berührung (Druck) des Membranpotentiometers ist. Somit kann das Membranpotentiometer zusammen mit einem Berührungspositionsmarker funktionieren, wie er in den oben beschriebenen Implementierungsvarianten vorgesehen ist.

Alternativ oder zusätzlich kann das Membranpotentiometer dazu eingerichtet sein, einen Widerstandswert aufzuweisen, der abhängig von einer Position eines Magnetfelds ist. Insbesondere kann sich der Widerstandswert des Membranpotentiometers ändern, wenn sich in unmittelbarer Nähe des Membranpotentiometers ein Magnet befindet. In "unmittelbarer Nähe" betrifft hier einen Abstand eines Magneten von dem Membranpotentiometer von ca. 1 mm bis 5 cm, vorzugsweise von ca. 5 mm bis 3 cm. Selbstverständlich kann der Magnet auch an dem Membranpotentiometer anliegen, dieses also berühren.

Da ein Membranpotentiometer nur eine geringe Anzahl von Messpunkten zulässt, kann eine Vielzahl von Membranpotentiometern entlang der Sensorschiene angeordnet sein, wobei jedes der Vielzahl von Membranpotentiometern ein oder mehrere entsprechende Sensorsignale in Form eines bestimmten Widerstandswertes ausgeben kann. Durch Kenntnis der Lage jedes einzelnen Membranpotentiometers entlang der Sensorschiene (in Bezug auf einen festen Referenzpunkt), können so die Positionen einer Vielzahl von Positionsmarkern bestimmt werden.

In noch einer weiteren Implementierungsvariante kann die Sensorschiene eine Vielzahl von Indikationselementen umfassen. Beispielsweise kann jedes der Vielzahl von Indikationselementen an oder neben einem zugehörigen der Vielzahl von Sensoren angeordnet sein. Bei nicht punktuellen Sensoren, beispielsweise einem Membranpotentiometer, kann die Vielzahl von Indikationselementen in einem vorgegebenen Abstand (Raster) entlang der Sensorschiene angeordnet sein.

Jedes der Vielzahl von Indikationselementen kann unterschiedliche Funktionen erfüllen. Beispielsweise kann ein Indikationselement eine bestimmte Farbe ausgeben oder darstellen, die sich abhängig von der Position eines Positionsmarkers ändert. So kann ein Indikationselement eine Lampe oder eine LED (Leuchtdiode) sein, die zum Beispiel einem bestimmten Sensor der Vielzahl von Sensoren zugeordnet ist. Gibt dieser Sensor ein Sensorsignal aus, wird er also durch einen entsprechend positionierten Positionsmarker aktiviert, kann das zugehörige Indikationselement dies farblich anzeigen. Zum Beispiel kann bei aktiviertem Sensor das zugehörige Indikationselement grün leuchten, während es bei nicht-aktiviertem Sensor rot leuchtet. Dadurch kann während des Einbaus oder auch zu einem späteren Zeitpunkt, beispielsweise von Passagierversorgungseinheiten mit Positionsmarker, die korrekte Position angezeigt und/oder überprüft werden.

Eine optionale Stromversorgung für das Indikationselement kann über den Sensor erfolgen oder das Indikationselement kann mit dem Sensor elektrisch gekoppelt sein, sodass bei einem Stromfluss vom Positionsmarker durch den Sensor auch das Indikationselement aktiviert wird.

Alternativ können die Indikationselemente auch aktiviert werden, die einem jeweiligen Sensor entsprechen, an dem ein Positionsmarker (und somit eine Passagierversorgungseinheit) angeordnet werden muss. Somit kann die Lage von Passagierversorgungseinheiten vor deren Einbau angezeigt werden, wodurch der Einbau erleichtert wird.

Alternativ oder zusätzlich kann mindestens eines der Vielzahl von Indikationselementen ein mechanisch, magnetisch und/oder thermisch betätigtes Indikationselement sein. Beispielsweise kann das Indikationselement mit dem zugehörigen Sensor gekoppelt sein, sodass bei einer Berührung des Sensors (bei einem Druck auf den Sensor) das Indikationselement bewegt wird, wobei die Bewegung sichtbar ist. Zum Beispiel kann das Indikationselement an ein Fenster in der Sensorschiene bewegt werden. Ebenso kann das Indikationselement auf ein Magnetfeld oder eine Temperaturveränderung (insbesondere Erwärmung, zum Beispiel durch Stromfluss im Sensor) eine sichtbare Veränderung erfahren. Insbesondere kann das Indikationselement seine Farbe aufgrund des Magnetfelds oder in Abhängigkeit seiner Temperatur verändern.

In einer anderen Implementierungsvariante kann der Positionsdetektor ferner eine Steuerung umfassen, die mit der Vielzahl von Sensoren verbunden ist und dazu eingerichtet ist, zu detektieren und auszuwerten, an welchem der Vielzahl von Sensoren ein Positionsmarker angeordnet ist. Die Steuerung kann insbesondere dazu eingerichtet sein, ein Sensorsignal von jedem der Vielzahl von Sensoren zu empfangen und auszuwerten. Insbesondere kann die Steuerung ein elektrisches Signal zu der Vielzahl von Sensoren senden, und ein entsprechendes elektrisches Signal abhängig von einer Aktivierung oder Deaktivierung des jeweiligen Sensors empfangen.

Ferner kann die Steuerung auch dazu eingerichtet sein, einen oder mehrere Sensoren als Gruppe auszuwerten, wobei die Steuerung eine Position der Gruppe zu einem Referenzpunkt speichert. Beispielsweise kann in der Steuerung eine Position einer Gruppe von Drucksensoren oder magnetischen Sensoren oder eines oder mehrerer Membranpotentiometer in Bezug auf einen Referenzpunkt (Ursprung oder Nullpunkt) hinterlegt sein. Dadurch kann die genaue Lage eines aktivierten Sensors oder eines Berührungspunktes oder magnetisch aktivierten Punktes auf der Sensorschiene bestimmt werden.

Gemäß einem zweiten Aspekt zum besseren Verständnis der vorliegenden Offenbarung kann ein Passagierversorgungskanal eine Montageschiene, die entlang einer Längsrichtung des Passagierversorgungskanals angeordnet ist, und mindestens eine Passagierversorgungseinheit, die dazu eingerichtet ist, an der Montageschiene befestigt zu werden, umfassen. Beispielsweise kann der Passagierversorgungskanal in Längsrichtung eines Fahrzeugs angeordnet sein, während eine oder mehrere Passagierversorgungseinheiten in dem Passagierversorgungskanal an der Montageschiene befestigt werden.

Ferner kann der Passagierversorgungskanal einen Positionsdetektor gemäß dem ersten Aspekt umfassen, wobei die mindestens eine Passagierversorgungseinheit den Positionsmarker des Positionsdetektors umfasst. Insbesondere kann jede Passagierversorgungseinheit mindestens einen Positionsmarker umfassen. Dadurch lässt sich mithilfe des Positionsdetektors die Lage jeder einzelnen Passagierversorgungseinheit in dem Passagierversorgungskanal bestimmen und überprüfen.

In einer Implementierungsvariante kann der Positionsmarker des Positionsdetektors an einem Gehäuse oder einer Halterung der Passagierversorgungseinheit angebracht oder darin integriert sein. Die Passagierversorgungseinheit kann somit an den Positionsdetektor angepasst sein und mit dessen Sensorschiene zusammenwirken.

In einer weiteren Implementierungsvariante kann die Sensorschiene des Positionsdetektors an der Montageschiene befestigt sein oder darin integriert sein und sich entlang einer Längsrichtung der Montageschiene erstrecken. Insbesondere kann die Vielzahl von Sensoren in der Montageschiene angebracht oder integriert sein, sodass es sich bei der Montageschiene und der Sensorschiene um ein und dasselbe Bauteil handelt.

Gemäß einem dritten Aspekt zum besseren Verständnis der vorliegenden Offenbarung kann ein Fahrzeugbereich einen Passagierversorgungskanal gemäß dem zweiten Aspekt umfassen. Bei dem Fahrzeugbereich kann es sich um einen Abschnitt des Fahrzeugs handeln, der mindestens einen Passagiersitz, insbesondere mindestens eine Sitzreihe, umfasst. Ferner kann der Fahrzeugbereich oberhalb des Passagiersitzes (oberhalb der Sitzreihe) den Passagierversorgungskanal aufweisen, sodass sich oberhalb des mindestens einen Passagiersitzes mindestens eine Passagierversorgungseinheit installieren lässt, deren Position mithilfe des Positionsdetektors aus dem ersten Aspekt detektiert und überprüft werden kann.

In einer Implementierungsvariante kann der Fahrzeugbereich ferner eine in Längsrichtung des Fahrzeugbereichs angeordnete Sitzschiene mit einer Vielzahl von Sitzdetektoren umfassen, wobei jeder der Vielzahl von Sitzdetektoren dazu eingerichtet ist, zu erkennen, ob ein Passagiersitz in der Sitzschiene an oder neben dem Sensor montiert ist. Bei der Vielzahl von Sitzdetektoren kann es sich um die gleiche oder ähnliche Konstruktion handeln wie bei dem Positionsdetektor gemäß dem ersten Aspekt. Dabei kann ein Positionsmarker an dem Passagiersitz vorgesehen sein, der die Lage des Passagiersitzes entlang der Sitzschiene markieren kann. Ferner kann der Fahrzeugbereich eine Steuerung umfassen, die mit der Vielzahl von Sitzdetektoren verbunden ist und dazu eingerichtet ist, auszuwerten, ob zu einem in der Sitzschiene montierten Passagiersitz ein in Längsrichtung des Fahrzeugbereichs zugehöriger Positionsmarker in dem Passagierversorgungskanal erkannt wird. Mit anderen Worten kann die Steuerung überprüfen oder zumindest auswerten, ob in Längsrichtung des Fahrzeugbereichs zu einem durch einen Sitzdetektor erkannten Passagiersitz oberhalb des Passagiersitzes eine Passagierversorgungseinheit mit zugehörigem Positionsmarker angeordnet und installiert ist.

Dadurch kann ein Fahrzeugbereich mit Passagiersitzen und Passagierversorgungseinheiten ausgestattet werden, ohne dass zuvor Pläne von dem Layout der Sitze und Versorgungseinheiten erstellt und zertifiziert werden müssen. Mit Hilfe der Steuerung kann während des Einbaus und/oder nach dem Einbau der Passagiersitze und Passagierversorgungseinheiten deren jeweilige Lage und deren relative Lage zueinander abgerufen und überprüft werden. Nur beispielhaft kann die Steuerung mehrere Layouts von Sitzen und Versorgungseinheiten speichern, die jeweils zur Überprüfung abgerufen werden können. Somit kann durch entsprechende Einstellung an der Steuerung (zum Beispiel Auswahl eines gespeicherten Layouts) überprüft werden, ob Positionsmarker in dem Passagierversorgungskanal und entsprechende Sitzdetektoren in der Sitzschiene an den zugehörigen Positionen vorhanden sind. Ferner können die oben beschriebenen Aspekte und Implementierungsvarianten selbstverständlich kombiniert werden, ohne dass dies explizit beschrieben ist, sofern dies in den Umfang der beigefügten Ansprüche fällt. Die vorliegende Offenbarung ist somit nicht auf die einzelnen Ausgestaltungen und Implementierungsvarianten in der beschriebenen Reihenfolge oder einer bestimmten Kombination der Aspekte und Implementierungsvarianten beschränkt.

Bevorzugte Ausführungsbeispiele der Erfindung werden nun anhand der beigefügten schematischen Zeichnungen näher erläutert, wobei:
- Figur 1: schematisch eine Ansicht eines Fahrzeugbereichs mit zum Teil bestücktem Passagierversorgungskanal zeigt;
- Figur 2: schematisch ein Detail eines Passagierversorgungskanals aus Figur 1 zeigt;
- Figur 3: schematisch einen Positionsmarker zeigt;
- Figur 4: schematisch einen Positionsdetektor zeigt;
- Figur 5: schematisch eine andere Variante eines Positionsdetektors zeigt; und
- Figur 6: schematisch einen Positionsdetektor zusammen mit einer Sitzschiene und Sitzdetektoren eines Fahrzeugbereichs zeigt.

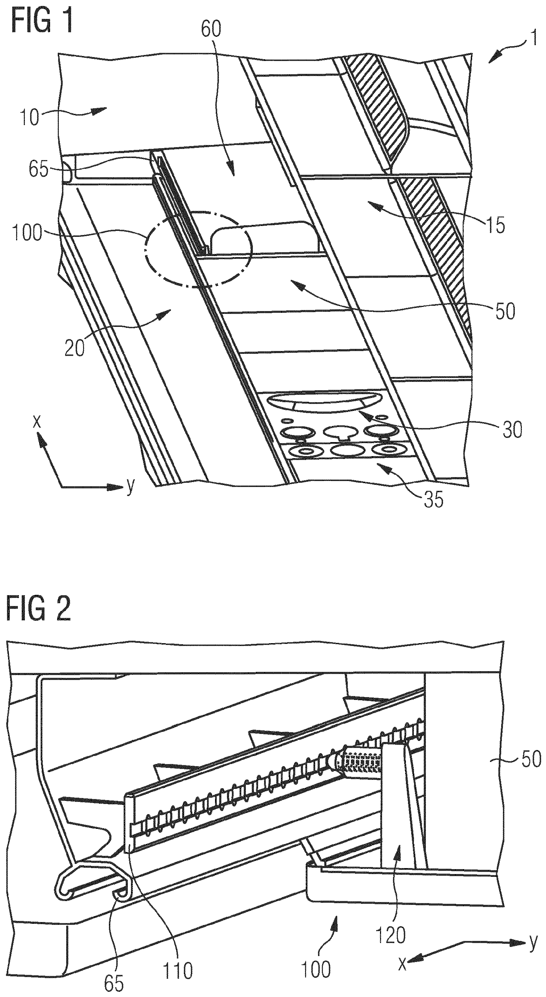

Figur 1 zeigt schematisch eine Ansicht eines Fahrzeugbereichs 1 mit zum Teil bestücktem Passagierversorgungskanal 60. Beispielsweise kann der Fahrzeugbereich 1 ein Überkopfgepäckfach 10 umfassen, an dessen in Figur 1 gezeigten Unterseite ein Passagierversorgungskanal 60, insbesondere in Längsrichtung des Fahrzeugs (X-Achse), angeordnet ist. Der Passagierversorgungskanal 60 weist mindestens eine Montageschiene 65 auf, die entlang einer Längsrichtung des Passagierversorgungskanals 60 (ebenfalls X-Achse) angeordnet ist.

In dem Passagierversorgungskanal 60 können verschiedene Passagierversorgungseinheiten installiert sein. So kann in dem Passagierversorgungskanal 60 ein Leselicht- und Informationsfeld 30 oder ein Luftduschenfeld 35 installiert sein, die für mindestens einen Passagier eine individuelle Leselampe bzw. individuelle Frischluftdüse enthalten. Ferner kann in dem Passagierversorgungskanal 60 eine Halterung 50 für Sauerstoffmasken installiert sein.

Bereiche, in denen keine Passagierversorgungseinheit 30, 35, 50 installiert ist, können durch einfache Abdeckungen verschlossen werden. Ebenso können Bereiche (in Y-Achsen-Richtung) neben dem Passagierversorgungskanal 60 durch entsprechende Abdeckungen verschlossen werden, beispielsweise eine Abdeckung 15 mit Handlauf sowie eine Abdeckung 20 mit Luftauslassgitter.

Figur 2 zeigt schematisch ein in Figur 1 strichpunktiert hervorgehobenes Detail des Passagierversorgungskanals 60. Der Versorgungskanal 60 umfasst mindestens eine Montageschiene 65, die dazu eingerichtet ist, eine Passagierversorgungseinheit 30, 35, 50 darin zu montieren. In der in Figur 2 dargestellten Variante kann die Passagierversorgungseinheit 30, 35, 50 (hier zum Beispiel eine Sauerstoffmaskeneinheit 50) an einem unteren Ende der Montageschiene 65 eingehängt und befestigt werden. Hierbei kann es sich um eine übliche Befestigung von Versorgungseinheiten 30, 35, 50 handeln, die daher nicht näher beschrieben wird.

An der Montageschiene 65 kann eine Sensorschiene 110 montiert (oder darin integriert) sein. Die Versorgungseinheit 30, 35, 50 kann zudem einen zu der Sensorschiene 110 zugehörigen Positionsmarker 120 umfassen. Beispielsweise kann der Positionsmarker 120 an der Versorgungseinheit 30, 35, 50 angebracht (oder darin integriert) sein. Der Positionsmarker 120 ist dazu eingerichtet, an einem von einer Vielzahl von Sensoren 111 der Sensorschiene 110 ein Sensorsignal auszulösen.

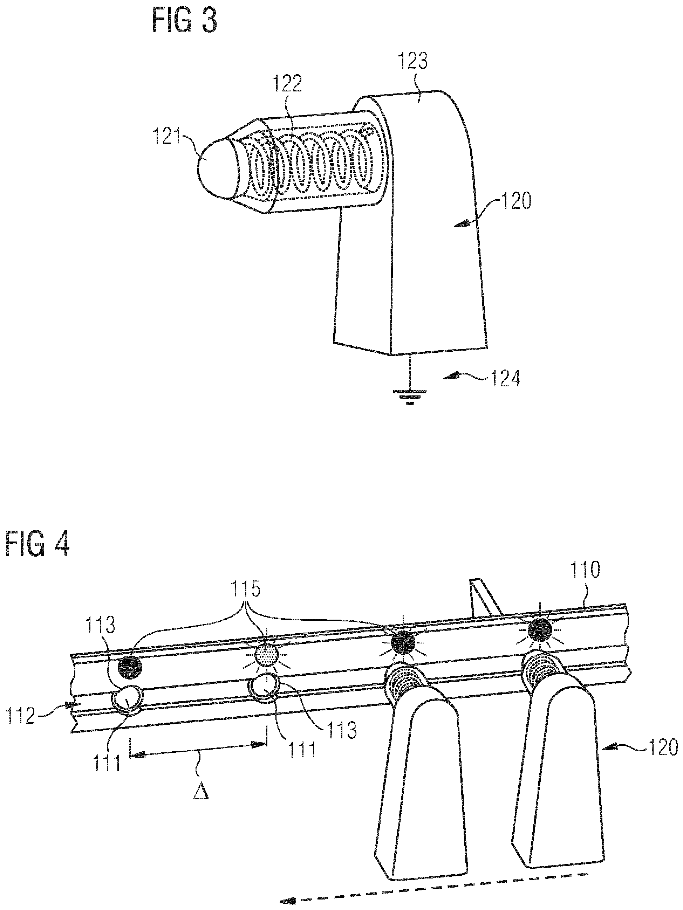

Unter Bezug auf Figuren 3 und 4, die schematisch einen Positionsmarker 120 bzw. einen Positionsdetektor 100 zeigen, wird die Funktionsweise des Positionsdetektors 100 erläutert. Der Positionsdetektor 100 umfasst eine Sensorschiene 110, die eine Vielzahl von Sensoren 111 aufweist. Ferner ist die Sensorschiene 110 dazu eingerichtet, beispielsweise in Längsrichtung des Passagierversorgungskanals 60 angebracht zu werden oder darin integriert zu sein. Der zugehörige Positionsmarker 120, der dazu eingerichtet ist, an der Passagierversorgungseinheit 30, 35, 50 befestigt zu werden oder darin integriert zu sein, kann an einem der Vielzahl von Sensoren 111 ein Sensorsignal auslösen.

Gemäß der in den Figuren 3 und 4 dargestellten Variante eines Positionsdetektors 100 umfasst die Sensorschiene 110 eine optionale, in Längsrichtung der Sensorschiene 110 verlaufende Nut 112. In der Nut 112 befindet sich eine Vielzahl von ebenfalls optionalen Vertiefungen 113. Der Positionsmarker 120 umfasst ein hervorstehendes Element 121 und ein Federelement 122, wobei letzteres dazu eingerichtet ist, dass hervorstehende Element 121 in Richtung der Sensorschiene 110 zu drücken. Der Positionsmarker 120 umfasst ferner ein feststehendes Element 123, welches an der Passagierversorgungseinheit 30, 35, 50 befestigt ist oder durch einen Abschnitt der Passagierversorgungseinheit 30, 35, 50 gebildet wird. Das Federelement 122 drückt nun das hervorstehende Element 121 von dem feststehenden Element 123 weg. Bei dem hervorstehenden Element 121 kann es sich um einen Stift oder eine Kugel oder ähnliches handeln, wobei eine möglichst punktuelle Berührung zwischen dem hervorstehenden Element 121 und der Sensorschiene 110 bewerkstelligt wird.

In Figur 4 ist eine Bewegung des Positionsmarkers 120 in Längsrichtung der Sensorschiene 110 schematisch dargestellt, wobei der Positionsmarker 120 in der durch den gestrichelten Pfeil dargestellten Richtung (in Figur 4 nach links) bewegt wird, weshalb der Positionsmarker 120 doppelt dargestellt ist. Das hervorstehende Element kann 121 entlang der Sensorschiene 110, hier zum Beispiel in der Nut 112, gleiten oder rollen. In jeder der optionalen Vertiefungen 113 kann das hervorstehende Element 121 einrasten. Das Einrasten erfolgt durch eine Bewegung des hervorstehenden Elements 121 in eine Richtung im Wesentlichen senkrecht zur Sensorschiene 110 (beispielsweise in Richtung der Y-Achse) bedingt durch das Federelement 122. Durch entsprechende Wahl einer geringen Tiefe der Vertiefungen 113 ist es möglich, dass das hervorstehende Element 121 bei einer weiteren Bewegung des Positionsmarkers 120 entlang der Sensorschiene 110 die Vertiefung 113 wieder verlässt. Dabei wird das hervorstehende Element 121 entgegen der Federkraft des Federelements 122 wieder in Richtung feststehendes Element 123 bewegt. Dieses (zwischenzeitliche) Einrasten ermöglicht ein haptisches Feedback während der Bewegung des Positionsmarkers 120 bzw. der zugehörigen Passagierversorgungseinheit 30, 35, 50, die den Positionsmarker 120 aufweist.

Die Sensorschiene 110 weist eine Vielzahl von Sensoren 111 auf. Beispielsweise kann jeweils ein Sensor 111 in einer Vertiefung 113 angeordnet sein. Selbstverständlich kann die Vielzahl von Sensoren auch an oder in der Sensorschiene 110 angebracht bzw. integriert sein, wenn keine Vertiefung 113 und/oder keine Nut 112 in der Sensorschiene 110 vorhanden ist.

Die Sensoren 111 umfassen einen Drucksensor, der durch Berührung oder Druck durch den Positionsmarker 120, insbesondere dessen hervorstehendes Element 121, aktiviert wird. Ein beispielhafter Drucksensor ist ein Piezoelement, das durch die auftretende Berührung durch den Positionsmarker 120 ein Stromsignal ausgibt. Ein weiterer beispielhafter Drucksensor kann ein elektrisches Signal, beispielsweise seinen Widerstandswert, in Abhängigkeit einer auf ihn wirkenden Druckkraft verändern.

Alternativ oder zusätzlich können ein Sensor 111 und ein Positionsmarker 120 jeweils ein elektrisch leitendes Element sein. Beispielsweise kann an dem Sensor 111 eine Spannung anliegen, während der Positionsmarker 120 mit einer Masseleitung (in Figur 3 als Erdung 124 dargestellt) verbunden ist. Berührt nun der Positionsmarker 120, insbesondere dessen hervorstehendes Element 121, den Sensor 111 wird ein elektrischer Stromkreis geschlossen, wodurch der elektrische Stromfluss einem Sensorsignal entspricht. Die Spannung kann dabei so gering gewählt werden, dass sie für Personal, das die Passagierversorgungseinheit 30, 35, 50 installiert, ungefährlich ist.

Ebenfalls alternativ oder zusätzlich kann über den Sensor 111 und den Positionsmarker 120 die zugehörige Passagierversorgungseinheit 30, 35, 50 mit Strom versorgt werden. Mit anderen Worten bilden der Sensor 111 und der Positionsmarker 120 eine Stromversorgung für die Passagierversorgungseinheit 30, 35, 50. Damit lässt sich nicht nur zuverlässig die Passagierversorgungseinheit 30, 35, 50 mit Strom versorgen, sondern gleichzeitig auch die (korrekte) Lage der Passagierversorgungseinheit 30, 35, 50 überprüfen.

Selbstverständlich kann auch umgekehrt der Positionsmarker 120 eine Spannung führen, während der Sensor mit einer Masseleitung verbunden ist. Beispielsweise kann die Spannungsquelle eine kleine Batterie oder ein Piezoelement am Positionsmarker 120 oder an der Passagierversorgungseinheit 30, 35, 50 sein.

Zwischen zwei benachbarten Sensoren 111 liegt ein vorgegebener Abstand Δ, wobei nach Möglichkeit immer der gleiche Abstand Δ zwischen zwei benachbarten Sensoren 111 der Vielzahl von Sensoren 111 vorgesehen ist. Durch dieses vorgegebene Raster lässt sich die Lage eines Positionsmarkers 120 entlang der Sensorschiene 110, und somit entlang des Passagierversorgungskanals 60, leicht bestimmen.

Ebenfalls optional kann die Sensorschiene 110 eine Vielzahl von Indikationselementen 115 umfassen. Beispielsweise kann jeweils eines der Vielzahl von Indikationselementen 115 an oder neben einem zugehörigen der Vielzahl von Sensoren 111 angeordnet sein. Ein Indikationselement 115 kann dabei dazu eingerichtet sein, ein Signal (visuell und/oder akustisch) auszugeben, wenn ein Positionsmarker 120 ein Sensorsignal an dem zugehörigen Sensor 111 auslöst, also den zugehörigen Sensor 111 aktiviert. So kann das Indikationselement anzeigen, ob ein Positionsmarker 120 und somit eine Passagierversorgungseinheit 30, 35, 50 an der richtigen Stelle im Passagierversorgungskanal 60 angeordnet und installiert ist. Alternativ oder zusätzlich kann, wie in Figur 4 dargestellt, die Vielzahl von Indikationselementen 115 so gesteuert werden, dass sie eine gewünschte Lage des Positionsmarkers 120 und somit einer Passagierversorgungseinheit 30, 35, 50 entlang der Sensorschiene 110 anzeigt. Beispielsweise kann ein Indikationselement grün leuchten (in Figur 4 gepunktet dargestellt), während die benachbarten Indikationselemente rot leuchten (in Figur 4 schraffiert dargestellt). Somit muss beim Einbau der Passagierversorgungseinheit 30, 35, 50 diese entlang der Sensorschiene 110 so verschoben werden (siehe gestrichelt dargestellter Pfeil in Figur 4), dass die Lage des zugehörigen Positionsmarkers 120 mit dem korrekten (grünen) Indikationselement 115 und mit dem zugehörigen Sensor 111 übereinstimmt.

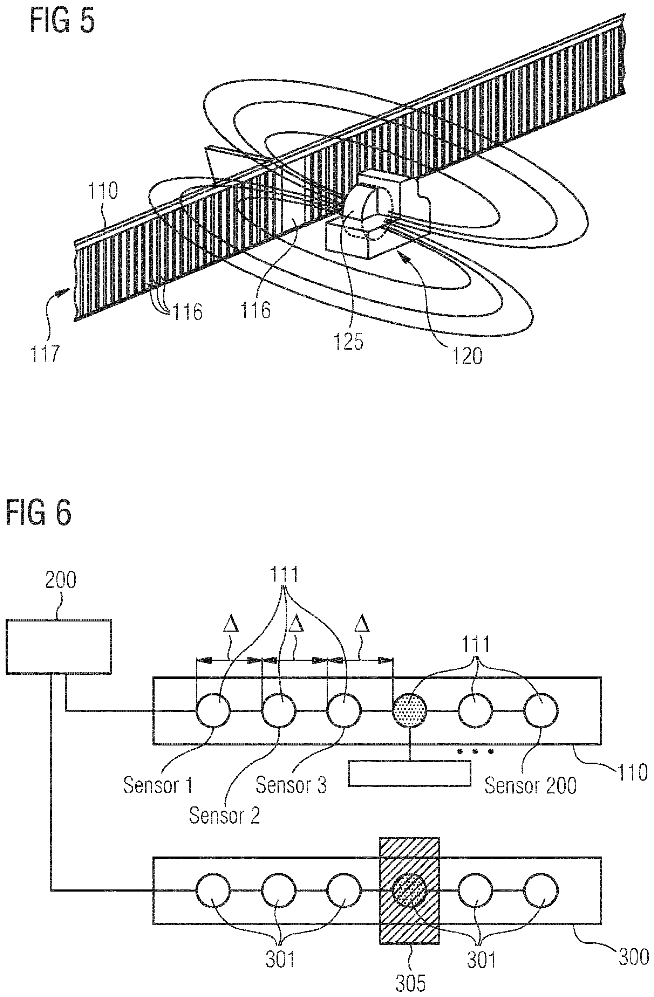

Figur 5 zeigt schematisch eine weitere Variante eines Positionsdetektors 100, die nicht unter den beanspruchten Schutzbereich fällt. In dieser Variante umfasst die Sensorschiene 110 eine Vielzahl von Magnetsensoren 116, die in Abhängigkeit der Stärke eines Magnetfelds einen Sensorwert verändern, beispielsweise einen Widerstandswert für elektrischen Strom verändern. Entsprechend kann an dem Positionsmarker 120 ein Magnet 125 installiert sein. Der Magnetsensor 116, der das größte (oder kleinste) Sensorsignal ausgibt, kann als der Sensor 111/116 bestimmt werden, der mit der Lage des Positionsmarkers 120 (in Längsrichtung der Sensorschiene 110) übereinstimmt. Dadurch kann die Lage des Positionsmarkers 120 und somit der Passagierversorgungseinheit 30, 35, 50 entlang der Sensorschiene 110, und somit entlang des Passagierversorgungskanals 60, kontaktlos bestimmt und ausgewertet werden.

Alternativ oder zusätzlich kann die Sensorschiene 110 ein Membranpotentiometer 117 umfassen. Dieses kann über Druck und/oder ein Magnetfeld an einer bestimmten Position entlang des Membranpotentiometers 117 einen bestimmten Widerstandswert für elektrischen Strom einnehmen. Damit kann mittels des Membranpotentiometers 117 mit einem (Berührungs-) Positionsmarker 120 gemäß Figur 3 oder mit einem magnetischen Positionsmarker 120 gemäß Figur 5 über Berührung bzw. kontaktlos die Position des Positionsmarkers 120 bestimmt werden.

Figur 6 zeigt schematisch einen Positionsdetektor 100 zusammen mit einer Sitzschiene 300 und Sitzdetektoren 301 eines Fahrzeugbereichs 1. So kann der Positionsdetektor 100 und/oder der Fahrzeugbereich 1 eine Steuerung 200 umfassen, die mindestens ein Sensorsignal von den Sensoren 111 der Sensorschiene 110 empfangen und auswerten kann. Dadurch ist die Steuerung 200 in der Lage, eine Position mindestens eines Positionsmarkers 120 entlang der Sensorschiene 110 (zum Beispiel in Längsrichtung des Fahrzeugbereichs 1; siehe X-Achse in Figuren 1 und 2) zu ermitteln.

Ferner kann die Steuerung 200 an die Sitzdetektoren 301 der Sitzschiene 300 angeschlossen sein. Zum Beispiel kann die Steuerung 200 Sensorsignale der Sitzdetektoren 301 empfangen und auswerten. Die Sitzdetektoren 301 sind dazu eingerichtet, zu erkennen, ob ein Passagiersitz 305 (in Figur 6 lediglich schematisch als Fußabdruck eines Sitzfußes dargestellt) in der Sitzschiene 300 an oder neben einem Sitzdetektor 301 montiert ist. Mit anderen Worten kann mithilfe der Sitzdetektoren 301 die Lage eines Passagiersitzes 305 entlang der Sitzschiene 300 ermittelt werden. Diese Sitzschiene 300 ist vorzugsweise ebenfalls entlang der Längsrichtung des Fahrzeugbereichs 1 (X-Achse) ausgerichtet und installiert.

Die Steuerung 200 kann nun auswerten, ob zu einem in der Sitzschiene 300 montierten Passagiersitz 305 ein in Längsrichtung des Fahrzeugbereichs 1 zugehöriger Positionsmarker 120 in dem Passagierversorgungskanal 60 vorhanden ist. Hierfür kann die Steuerung 200 die Sensorsignale der Sensoren 111 und der Sitzdetektoren 301 vergleichen, da die Steuerung die korrespondierende Lage der Sensoren entlang der Längsrichtung des Fahrzeugbereichs 1 gespeichert hat. Ferner kann die Steuerung 200 eine Ausgabeeinrichtung (nicht dargestellt) umfassen, mit der einerseits die Lage aller Positionsmarker 120 entlang der Sensorschiene 110 zum Beispiel auf einer Anzeige dargestellt werden kann. Andererseits kann die Lage aller Passagiersitzes 305 entlang der Sitzschiene 300 auf der Anzeige dargestellt werden. Ferner kann die Steuerung 200 über die Ausgabeeinrichtung visuell oder akustisch darstellen, dass die Lage sämtlicher Passagierversorgungseinheiten 30, 35, 50 (über jeweilige Positionsmarker 120) mit der Lage eines zugehörigen Passagiersitzes 305 übereinstimmt oder nicht.

Die oben beschriebenen Ausführungsbeispiele und Varianten dienen nur der Veranschaulichung der Erfindung. Alle Beispiele, Varianten und einzelne Details können beliebig miteinander kombiniert werden, um bestimmte Ausführungsformen der Erfindung zu bilden, sofern diese in den Umfang der beigefügten Ansprüche fallen.

## Patentansprüche

1. Positionsdetektor (100) für eine in einem Passagierversorgungskanal (60) montierbare Passagierversorgungseinheit (30, 35, 50), wobei der Positionsdetektor (100) umfasst:
eine Sensorschiene (110), die eine Vielzahl von Sensoren (111) aufweist und dazu eingerichtet ist, in Längsrichtung des Passagierversorgungskanals (60) angebracht zu werden; und
einen Positionsmarker (120), der dazu eingerichtet ist, an der Passagierversorgungseinheit (30, 35, 50) befestigt zu werden, **dadurch gekennzeichnet, dass** der Positionsmarker (120) ein hervorstehendes Element (121) und ein Federelement (122) umfasst, und wobei das Federelement (122) dazu eingerichtet ist, das hervorstehende Element (121) in Richtung der Vielzahl von Sensoren (111) zu drücken,
wobei mindestens einer der Vielzahl von Sensoren (111) ein Drucksensor ist, der dazu eingerichtet ist, bei Berührung durch das hervorstehende Element (121) des Positionsmarkers (120) ein elektrisches Sensorsignal auszugeben oder aufgrund einer durch das hervorstehende Element (121) des Positionsmarkers (120) einwirkenden Druckkraft zu verändern.

2. Positionsdetektor (100) gemäß Anspruch 1, wobei die Sensorschiene (110) eine in Längsrichtung der Sensorschiene (110) verlaufende Nut (112) aufweist und die in Längsrichtung der Sensorschiene (110) verlaufende Nut (112) eine Vielzahl von Vertiefungen (113) umfasst, und wobei jeder der Vielzahl von Sensoren (111) in einer zugehörigen Vertiefung (113) angeordnet ist.

3. Positionsdetektor (100) gemäß Anspruch 1 oder 2, wobei mindestens einer der Vielzahl von Sensoren (111) ein elektrisch leitfähiges Element ist, und wobei der Positionsmarker (120) dazu eingerichtet ist, an eine elektrische Spannungsquelle oder eine elektrische Masseleitung (124) angeschlossen zu werden und einen der Vielzahl von Sensoren (111) zu kontaktieren.

4. Positionsdetektor (100) gemäß einem der Ansprüche 1 bis 3, wobei mindesten einer der Vielzahl von Sensoren (111) ein Membranpotentiometer (117) ist.

5. Positionsdetektor (100) gemäß einem der Ansprüche 1 bis 4, wobei die Sensorschiene (110) eine Vielzahl von Indikationselementen (115) umfasst, und wobei jedes der Vielzahl von Indikationselementen (115) einem der Vielzahl von Sensoren (111) zugeordnet ist, an oder neben dem zugeordneten Sensor (111) angeordnet ist und durch ein Signal angibt, dass der zugeordneten Sensor (111) durch den Positionsmarker (120) aktiviert ist.

6. Positionsdetektor (100) gemäß einen der Ansprüche 1 bis 5, ferner umfassend:
eine Steuerung (200), die mit der Vielzahl von Sensoren (111) verbunden ist und dazu eingerichtet ist, zu detektieren und auszuwerten, welchem der Vielzahl von Sensoren (111) ein Positionsmarker (120) angeordnet ist.

7. Passagierversorgungskanal (60), umfassend:
eine Montageschiene (65), die entlang einer Längsrichtung des Passagierversorgungskanals (60) angeordnet ist;
mindestens eine Passagierversorgungseinheit (30, 35, 50), die dazu eingerichtet ist, an der Montageschiene (65) befestigt zu werden; und
einen Positionsdetektor (100) gemäß einem der Ansprüche 1 bis 6,
wobei die mindestens eine Passagierversorgungseinheit (30, 35, 50) den Positionsmarker (120) des Positionsdetektors (100) umfasst.

8. Passagierversorgungskanal (60) gemäß Anspruch 7, wobei die Sensorschiene (110) des Positionsdetektors (100) an der Montageschiene (65) befestigt ist oder darin integriert ist und sich entlang einer Längsrichtung der Montageschiene (65) erstreckt.

9. Fahrzeugbereich (1), umfassend:
einen Passagierversorgungskanal (60) gemäß Anspruch 7 oder 8.

10. Fahrzeugbereich (1) gemäß Anspruch 9, ferner umfassend:
eine in Längsrichtung des Fahrzeugbereichs (1) angeordnete Sitzschiene (300) mit einer Vielzahl von Sitzdetektoren (301), wobei jeder der Vielzahl von Sitzdetektoren (301) dazu eingerichtet ist, zu erkennen, ob ein Passagiersitz (305) in der Sitzschiene (300) an oder neben dem Sitzdetektor (301) montiert ist; und
eine Steuerung (200), die mit der Vielzahl von Sitzdetektoren (301) verbunden ist und dazu eingerichtet ist, auszuwerten, ob zu einem in der Sitzschiene (300) montierten Passagiersitz (305) ein in Längsrichtung des Fahrzeugbereichs (1) zugehöriger Positionsmarker (120) in dem Passagierversorgungskanal (60) erkannt wird.

## Claims

1. Position detector (100) for a passenger service unit (30, 35, 50) which can be installed in a passenger service channel (60), wherein the position detector (100) comprises:
a sensor rail (110) which has a multiplicity of sensors (111) and is configured to be fitted in the longitudinal direction of the passenger service channel (60); and
a position marker (120) which is configured to be fastened to the passenger service unit (30, 35, 50), **characterized in that** the position marker (120) comprises a protruding element (121) and a spring element (122), and wherein the spring element (122) is configured to press the protruding element (121) in the direction of the multiplicity of sensors (111),
wherein at least one of the multiplicity of sensors (111) is a pressure sensor which is configured to output an electrical sensor signal when touched by the protruding element (121) of the position marker (120) or to change it due to a compressive force acting by way of the protruding element (121) of the position marker (120).

2. Position detector (100) according to Claim 1, wherein the sensor rail (110) has a groove (112) running in the longitudinal direction of the sensor rail (110), and the groove (112) running in the longitudinal direction of the sensor rail (110) comprises a multiplicity of depressions (113), and wherein each of the multiplicity of sensors (111) is arranged in an associated depression (113).

3. Position detector (100) according to Claim 1 or 2, wherein at least one of the multiplicity of sensors (111) is an electrically conductive element, and wherein the position marker (120) is configured to be connected to an electrical voltage source or to an electrical earth line (124) and to make contact with one of the multiplicity of sensors (111).

4. Position detector (100) according to one of Claims 1 to 3, wherein at least one of the multiplicity of sensors (111) is a membrane potentiometer (117).

5. Position detector (100) according to one of Claims 1 to 4, wherein the sensor rail (110) comprises a multiplicity of indication elements (115), and wherein each of the multiplicity of indication elements (115) is associated with one of the multiplicity of sensors (111), is arranged on or beside the associated sensor (111) and uses a signal to indicate that the associated sensor (111) is activated by the position marker (120).

6. Position detector (100) according to one of Claims 1 to 5, also comprising:
a controller (200) which is connected to the multiplicity of sensors (111) and is configured to detect and evaluate at which of the multiplicity of sensors (111) a position marker (120) is arranged.

7. Passenger service channel (60) comprising:
an installation rail (65) which is arranged along a longitudinal direction of the passenger service channel (60);
at least one passenger service unit (30, 35, 50) which is configured to be fastened to the installation rail (65); and
a position detector (100) according to one of Claims 1 to 6,
wherein the at least one passenger service unit (30, 35, 50) comprises the position marker (120) of the position detector (100).

8. Passenger service channel (60) according to Claim 7, wherein the sensor rail (110) of the position detector (100) is fastened to the installation rail (65) or is integrated in the latter and extends along a longitudinal direction of the installation rail (65).

9. Vehicle area (1) comprising:
a passenger service channel (60) according to Claim 7 or 8.

10. Vehicle area (1) according to Claim 9, also comprising:
a seat rail (300) which is arranged in the longitudinal direction of the vehicle area (1) and has a multiplicity of seat detectors (301), wherein each of the multiplicity of seat detectors (301) is configured to detect whether a passenger seat (305) is installed in the seat rail (300) at or beside the seat detector (301); and
a controller (200) which is connected to the multiplicity of seat detectors (301) and is configured to evaluate whether, for a passenger seat (305) installed in the seat rail (300), an associated position marker (120) in the longitudinal direction of the vehicle area (1) is detected in the passenger service channel (60).

## Revendications

1. Détecteur de position (100) pour une unité d'approvisionnement de passagers (30, 35, 50) pouvant être montée dans un canal d'approvisionnement de passagers (60), le détecteur de position (100) comprenant:
un rail de capteurs (110), qui présente une pluralité de capteurs (111) et qui est conçu pour être fixé dans la direction longitudinale du canal d'approvisionnement de passagers (60); et
un marqueur de position (120), qui est conçu pour être fixé à l'unité d'approvisionnement de passagers (30, 35, 50), **caractérisé en ce que** le marqueur de position (120) comprend un élément saillant (121) et un élément ressort (122), et dans lequel l'élément ressort (122) est conçu pour pousser l'élément saillant (121) en direction de la pluralité de capteurs (111),
dans lequel au moins l'un de la pluralité de capteurs (111) est un capteur de pression, qui est conçu pour émettre un signal de capteur électrique lorsque l'élément saillant (121) touche le marqueur de position (120) ou pour se modifier en fonction d'une force de pression exercée par l'élément saillant (121) du marqueur de position (120).

2. Détecteur de position (100) selon la revendication 1, dans lequel le rail de capteurs (110) présente une rainure (112) s'étendant dans la direction longitudinale du rail de capteurs (110) et la rainure (112) s'étendant dans la direction longitudinale du rail de capteurs (110) comprend une pluralité de creux (113), et dans lequel chacun de la pluralité de capteurs (111) est disposé dans un creux (113) associé.

3. Détecteur de position (100) selon la revendication 1 ou 2, dans lequel au moins l'un de la pluralité de capteurs (111) est un élément électriquement conducteur, et dans lequel le marqueur de position (120) est conçu pour être raccordé à une source de tension électrique ou à une ligne de masse électrique (124) et pour venir au contact de l'un de la pluralité de capteurs (111).

4. Détecteur de position (100) selon l'une quelconque des revendications 1 à 3, dans lequel au moins l'un de la pluralité de capteurs (111) est un potentiomètre à membrane (117).

5. Détecteur de position (100) selon l'une quelconque des revendications 1 à 4, dans lequel le rail de capteurs (110) comprend une pluralité d'éléments d'indication (115), et dans lequel chacun de la pluralité d'éléments d'indication (115) est associé à l'un de la pluralité de capteurs (111), est disposé au niveau ou à côté du capteur (111) associé et indique par un signal que le capteur (111) associé est activé par le marqueur de position (120).

6. Détecteur de position (100) selon l'une quelconque des revendications 1 à 5, comprenant en outre:
une unité de commande (200), qui est reliée à la pluralité de capteurs (111) et qui est conçue pour détecter et évaluer celui de la pluralité de capteurs (111) auquel est adjacent un marqueur de position (120).

7. Canal d'approvisionnement de passagers (60), comprenant:
un rail de montage (65), qui est disposé le long d'une direction longitudinale du canal d'approvisionnement de passagers (60);
au moins une unité d'approvisionnement de passagers (30, 35, 50), qui est conçue pour être fixée au rail de montage (65); et
un détecteur de position (100) selon l'une quelconque des revendications 1 à 6,
dans lequel l'au moins une unité d'approvisionnement de passagers (30, 35, 50) comprend le marqueur de position (120) du détecteur de position (100).

8. Canal d'approvisionnement de passagers (60) selon la revendication 7, dans lequel le rail de capteurs (110) du détecteur de position (100) est fixé au rail de montage (65) ou y est intégré et s'étend le long d'une direction longitudinale du rail de montage (65).

9. Zone de véhicule (1), comprenant:
un canal d'approvisionnement de passagers (60) selon la revendication 7 ou 8.

10. Zone de véhicule (1) selon la revendication 9, comprenant en outre:
un rail de siège (300) disposé dans la direction longitudinale de la zone de véhicule (1) comprenant une pluralité de détecteurs de siège (301), dans lequel chacun de la pluralité de détecteurs de siège (301) est conçu pour reconnaître si un siège de passager (305) est monté dans le rail de siège (300) au niveau ou à côté du détecteur de siège (301); et
une unité de commande (200), qui est reliée à la pluralité de détecteurs de siège (301) et qui est conçue pour évaluer si, pour un siège de passager (305) monté dans le rail de siège (300), un marqueur de position (120) associé dans la direction longitudinale de la zone de véhicule (1) est détecté dans le canal d'approvisionnement de passagers (60).
